# NEUE EUROPÄISCHE PATENTSCHRIFT

(11) **EP 0 530 387 B2**
(45) Veröffentlichungstag und Bekanntmachung des Hinweises auf die Entscheidung über den Einspruch: **06.10.1999**
(45) Hinweis auf die Patenterteilung: 02.11.1995
(21) Anmeldenummer: 91114686.8
(22) Anmeldetag: 31.08.1991
(51) Int. Cl.: F16L 47/00

(54) **Rohrleitungsverbindung und Verfahren zur Herstellung von Rohrleitungsverbindungen aus Polyolefin**
Pipeline connection and method of manufacturing pipeline connections made of polyolefine
Raccord pour tuyauterie et méthode de fabrication de raccords pour tuyauteries en polyoléfine

(43) Veröffentlichungstag der Anmeldung: 10.03.1993
(73) Patentinhaber: WIRSBO Rohrproduktion und Vertriebs-GmbH, D-63150 Heusenstamm (DE)
(72) Erfinder: Imgram, Friedrich, W-6056 Heusenstamm (DE)
(74) Vertreter: Wolgast, Rudolf, Dipl.-Chem. Dr.

(56) Entgegenhaltungen:
- EP-A- 0 102 919
- CH-A- 504 642
- DE-A- 3 608 843
- DE-A- 3 817 442
- DE-U- 8 015 077
- FR-A- 2 555 283
- Prospekt "REHAU-Heizkörperanschlußsystem Schiebehülse", Technische Information 85 3601, Druck Nr. 85 3601 MÜS 8.89

## Beschreibung

Die Erfindung betrifft ein Verfahren zur Herstellung einer Schrumpfverbindung aus einem Rohrende eines Rohres aus vernetztem Polyolefin und einem Anschlußteil mit einer Oberflächenstruktur, bei welchem Verfahren das Rohrende des Rohres aus vernetztem Polyolefin einen Innendurchmesser hat, der kleiner als der Außendurchmesser des Anschlußteils ist, und mit Hilfe eines Spreizdorns bei Umgebungstemperatur auf einen Innendurchmesser aufgeweitet wird, der größer als der Außendurchmesser des Anschlußteils ist, und nach Entfernung des Spreizdorns das noch aufgeweitete Rohrende des Rohres und das Anschlußteil aufeinandergesteckt und anschließend unter Rückschrumpfen des aufgeweiteten Rohrendes miteinander verbunden werden.

Die Erfindung betrifft auch eine Rohrleitungsverbindung in Form einer Schrumpfverbindung aus einem Anschlußteil mit einer Oberflächenstruktur und einem Rohrende eines Rohres aus vernetztem Polyolefin, das einen Innendurchmesser hat, der kleiner als der Außendurchmesser des Anschlußteils ist, wobei das bei Umgebungstemperatur aufgeweitete Rohrende des Rohres unter Rückschrumpfung mit dem Anschlußteil verbunden ist.

Schließlich betrifft die Erfindung auch eine Rohrleitungsverbindung in Form einer Schrumpfverbindung aus einem ersten Rohrende eines ersten Rohres aus vernetztem Polyolefin und einem zweiten Rohrende eines zweiten Rohres aus vernetztem Polyolefin, das einen Innendurchmesser hat, der kleiner als der Außendurchmesser des ersten Rohrendes ist, wobei das bei Umgebungstemperatur aufgeweitete zweite Rohrende unter Rückschrumpfung mit dem ersten Rohrende verbunden ist.

Bei einem bekannten Verfahren und einer bekannten Rohrleitungsverbindung dieser Art (DE-A-3 817 442) wird die Rohrleitungsverbindung beispielsweise mittels einer Schrumpfmuffe hergestellt, welche die Rohrenden zweier Rohre überbrückt. Die Schrumpfmuffe kann aus einem thermoelastischen Material wie vernetztem Polyolefin bestehen. Sie wird dadurch mit den Rohrenden verbunden, daß das vernetzte Polyolefin nach dem Erwärmen über den Kristallitschmelzpunkt hinaus im erwärmten Zustand verformbar ist und in diesem erwärmten Zustand unter Aufweitung auf die Rohrenden aufgeschoben werden kann. In gleicher Weise kann auch das Rohrende eines Rohres aus vernetztem Polyolefin auf ein Anschlußteil, zum Beispiel ein T-Stück aufgeschoben werden.

Aus der EP-A-0 102 919 ist ein Verfahren zum Verbinden von Rohren und eine so hergestellte Rohrverbindung bekannt, bei der ein erstes Rohrende aus vernetztem Polyolefin im kalten, vorzugsweise aber im über den Kristallitschmelzpunkt hinaus erwärmten Zustand aufgeweitet wird. In das aufgeweitete und abgekühlte erste Rohrende wird dann ein zweites Rohrende eingeführt. Anschließend wird das aufgeweitete erste Rohrende über den Kristallitschmelzpunkt hinaus erwärmt, wobei es auf das zweite Rohrende aufschrumpft und eine dichte Verbindung der Rohrenden entsteht.

Die aus diesen Druckschriften bekannten Verfahren und Rohrleitungsverbindungen von vernetzten Polyolefinen beruhen darauf, daß diese Polyolefine nicht nur im über den Kristallitschmelzpunkt hinaus erwärmten Zustand, sondern auch im kalten und teilweise kristallinen Zustand verformbar sind. Sie stellen darauf ab, daß die so verformten und durch Abkühlung im verformten Zustand eingefrorenen Polyolefine beim Erwärmen auf eine Temperatur über dem Kristallitschmelzpunkt in den thermoelastischen Zustand übergehen, in dem sie ihre ursprüngliche Form wieder einzunehmen trachten, wodurch die gewünschte Schrumpfverbindung erhalten wird. Die Durchführung der bekannten Verfahren bringt daher gewisse Schwierigkeiten mit sich, weil der Kristallitschmelzpunkt ziemlich hoch liegt, im Falle von vernetztem Polyethylen bei ca. 135°C. Die auf Temperaturen über dem Kristallitschmelzpunkt erwärmten und bei dieser Temperatur aufgeweiteten Rohrenden müssen dann rasch, also vor zu weitgehender Abkühlung und thermoelastischer Rückverformung auf das zu verbindende Anschlußteil aufgebracht werden. Läßt man dagegen unter den Kristallitschmelzpunkt abkühlen, so erfordert die Rückverformung und Herstellung der Verbindung die nachträgliche Wiedererwärmung auf Temperaturen über dem Kristallitschmelzpunkt.

Aus der DE-A-3 608 843 ist bekannt, daß die Rückverformung von kalt aufgeweiteten Rohrenden aus vernetztem Polyethylen auch bei Umgebungstemperatur erfolgt. Darauf beruht ein Klemmverfahren und ein Klemmverbinder zur Herstellung einer Klemmverbindung. Dazu wird das Rohrende vor der Aufweitung mit einer Schiebehülse versehen, deren Innendurchmesser kleiner als der Außendurchmesser des aufgeweiteten Rohrendes ist, und nach der Aufweitung auf ein mit Ringnuten versehenes Anschlußteil des Klemmverbinders aufgesteckt. Die Schiebehülse wird dann auf das aufgeweitete, aufgesteckte Rohrende aufgeschoben und das sich rückverformende Rohrende in die Ringnuten des Anschlußteils des Klemmverbinders eingepreßt. Dadurch wird die Rückverformung des Rohrendes unterstützt und eine dauerhafte Verklemmung des Rohrendes mit dem Anschlußteil des Klemmverbinders erreicht.

Die Aufgabe der Erfindung besteht darin, eine sichere und abdichtende Rohrleitungsverbindung der eingangs genannten Art zu schaffen, die unter Umgebungsbedingungen ohne Wärmeeinwirkung herstellbar ist.

Erfindungsgemäß wird diese Aufgabe dadurch gelöst, daß das Rohrende mit einem Spannring aus einem bei Umgebungstemperatur aufweitbaren und selbst-rückverformbaren Material versehen wird und das zusammen mit dem Spannring bei Umgebungstemperatur reversibel aufgeweitete Rohrende zusammen mit dem Spannring durch Selbst-Rückverformung bei Umgebungstemperatur fest und abdichtend auf das Anschlußteil aufgeschrumpft wird.

Hinsichtlich der Rohrleitungsverbindung des Anschlußteils mit einem Rohrende wird diese Aufgabe dadurch gelöst, daß das Rohrende mit einem Spannring aus einem bei Umgebungstemperatur aufweitbaren und selbst-rückverformbaren Material versehen ist und das zusammen mit dem Spannring bei Umgebungstemperatur reversibel aufgeweitete Rohrende aus vernetztem Polyolefin zusammen mit dem Spannring durch Selbst-Rückverformung bei Umgebungstemperatur fest und abdichtend auf das Anschlußteil aufgeschrumpft ist.

Hinsichtlich der Rohrleitungsverbindung aus zwei Rohrenden wird diese Aufgabe dadurch gelöst, daß das zweite Rohrende mit einem Spannring aus einem bei Umgebungstemperatur aufweitbaren und selbst-rückverformbaren Material versehen ist und das zusammen mit dem Spannring bei Umgebungstemperatur aufgeweitete zweite Rohrende zusammen mit dem Spannring durch Selbst-Rückverformung bei Umgebungstemperatur fest und abdichtend auf das erste Rohrende aufgeschrumpft ist.

Die Erfindung beruht auf der überraschenden Erkenntnis, daß thermoelastische Polyolefine, insbesondere vernetzte Polyolefine, auch im kalten und teilweise kristallinen Zustand, d.h. im nicht über den Kristallitschmelzpunkt hinaus erwärmten Zustand, eine hinreichend weit gehende, reversible Verformbarkeit besitzen. Diese Selbst-Rückverformung bei Umgebungstemperatur erfolgt einerseits mit so geringer Geschwindigkeit, daß nach Entfernung des Spreizdorns das aufgeweitete Rohrende auf das jeweils gewünschte Anschlußteil aufgesteckt werden kann, und andererseits mit so hoher Geschwindigkeit, daß bei der Herstellung der Rohrleitungsverbindung keine unnötigen Wartezeiten entstehen. Die so ohne Wärmeeinwirkung hergestellte Schrumpfverbindung genügt hinsichtlich ihrer Festigkeit und Dichtheit den üblichen Ansprüchen.

Im Vergleich zu anderen Materialien haben vernetzte Polyolefine den Vorteil, daß die Aufweitung, soweit sie nach dem Verbinden mit dem Anschlußteil bestehen bleibt, nicht zur Bildung von Spannungsrissen führt.

Das erfindungsgemäße Verfahren bietet daher eine besonders vorteilhafte Möglichkeit, Rohre aus vernetztem Polyolefin ohne Wärmeeinwirkung mit dem jeweils gewünschten Anschlußteil zu verbinden. Dabei wird allein durch die Selbst-Rückverformung des aufgeweiteten Rohrendes eine besonders feste und abdichtende, insbesondere gasdichte Schrumpfverbindung erhalten. Bei Herstellung dieser Schrumpfverbindung paßt sich das vernetzte Polyolefin gegebenenfalls vorhandenen Oberflächenstrukturen an dem Anschlußteil an. Als solche, die Bindungsfestigkeit erhöhenden Oberflächenstrukturen kommen beispielsweise Wülste, Sicken, Rillen oder Rändelungen infrage, mit denen das selbst-rückverformte vernetzte Polyolefin in Eingriff kommt.

Im Zusammenhang mit dem vorstehend beschriebenen Verfahren ist auch eine weitere Sicherung der hergestellten Rohrleitungsverbindungen möglich, soweit dies erforderlich ist. Dazu können Rohrschellen bekannter Art dienen. Es ist aber auch möglich, auf das Rohrende des Rohres aus vernetztem Polyolefin einen Spannring aufzubringen. Dieser Spannring kann, sofern er ebenfalls aus einem reversibel verformbaren Material besteht, von Beginn an auf das Rohrende aufgebracht werden. Es ist aber auch möglich, einen nicht oder nur wenig verformbaren Spannring aus z.B. Metall nach der Herstellung der Rohrleitungsverbindung zum Beispiel mit bekannten hydraulischen Mitteln auf das rohrseitige Ende der Rohrleitungsverbindung aufzubringen.

Ausführungsbeispiele der nach dem erfindungsgemäßen Verfahren hergestellten Rohrleitungsverbindungen sind in den Abbildungen dargestellt und werden nachfolgend an Hand der Bezugszeichen im einzelnen erläutert und beschrieben. Es zeigen
- Figur 1: eine Schnittansicht einer Rohrleitungsverbindung aus einem Anschlußteil und einem nach dem erfindungsgemäßen Verfahren aufgeschrumpften Rohrende;
- Figur 2: eine Schnittansicht der Rohrleitungsverbindung gemäß Figur 1 mit einem Spannring; und
- Figur 3: eine Schnittansicht einer erfindungsgemäßen Rohrleitungsverbindung zwischen zwei Rohrenden.

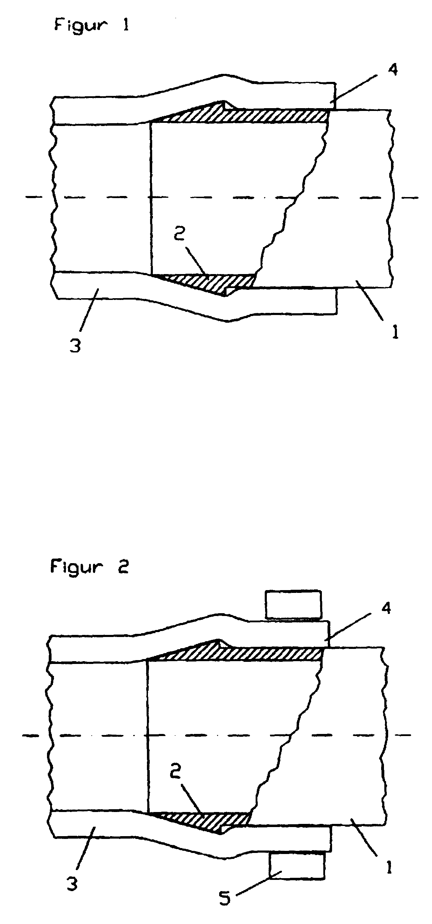

In der Schnittansicht von Figur 1 erkennt man ein Anschlußteil 1, das beispielsweise ein gerades Rohrstück, ein Winkelrohr oder anderes Verbindungsstück zur Verknüpfung zweier Rohre, aber auch zum Beispiel ein dreifaches Verbindungsstück wie ein T-Stück sein kann. Dieses Anschlußteil 1 ist aus einem Material wie Metall, Glas, Keramik, Kunststoff oder einem anderen, für den jeweiligen Anwendungszweck ausgewählten Material hergestellt. An jeder Verbindungsstelle ist das Anschlußteil 1 mit einer die Bindungsfestigkeit erhöhenden Oberflächenstruktur versehen. In dem dargestellten Ausführungsbeispiel wird diese Oberflächenstruktur von einem verstärkten, sich zum Ende hin verjüngenden Endteil 2 gebildet. Stattdessen können aber auch ein oder mehrere Wülste, Sicken oder Rillen oder auch Rändelungen und dergleichen vorgesehen werden.

Die Darstellung von Figur 1 zeigt ein Rohr 3 aus vernetztem Polyolefin. Der Innendurchmesser des Rohres 3 ist kleiner als der Außendurchmesser des Anschlußteils 1; er kann, wie dargestellt, im wesentlichen gleich dem Innendurchmesser des Anschlußteils 1 sein, wodurch die Ausbildung von Strömungswiderständen durch Verengungen und Ablagerungen an den Verengungen aus dem durch das Anschlußteil 1 und das Rohr 3 fließenden Medium verhindert werden können. Zur Herstellung der Rohrverbindung wird das Rohrende 4 bei Umgebungstemperatur zum Beispiel durch einen Spreizdorn üblicher Bauart so weit aufgeweitet, daß der Innendurchmesser des Rohrendes 4 mindestens ebenso weit ist wie der Außendurchmesser des Anschlußteils 1 im Bereich des verstärkten Endteils 2. Nach dem Aufschieben über das verstärkte Endteil 2 hinaus unterliegt das Rohrende 4 der Selbst-Rückverformung auf die ursprünglichen Maße. Als Folge davon paßt sich das Rohrende 4, wie dargestellt, an das Außenprofil des Anschlußteils 1 an. Da das Rohrende 4 ursprünglich einen Innendurchmesser aufweist, der geringer als der Außendurchmesser des Anschlußteils 1 ist, legt sich das Rohrende 4 über seine Länge eng an den Endteil 2 des Anschlußteils 1 an. Dadurch entsteht am Ende eine ziemlich großflächige, sehr enge Schrumpfverbindung zwischen dem Rohrende 4 und dem Anschlußteil 1.

Figur 2 zeigt eine weitere Ausführung der vorstehend beschriebenen Rohrleitungsverbindung, wobei entsprechende Teile mit gleichen Bezugszeichen versehen sind. Bei dieser Ausführung ist als zusätzliche Sicherung für die hergestellte Schrumpfverbindung zwischen dem Rohrende 4 und dem Anschlußteil 1 ein Spannring 5 vorgesehen. Dieser Spannring 5 besteht vorzugsweise aus dem gleichen Material wie das Rohr 3. In dem dargestellten Ausführungsbeispiel besteht das Rohr 3 wie auch der Spannring 5 aus vernetztem Polyethylen. Der Innendurchmesser des Spannrings 5 ist eng an den Außendurchmesser des Rohres 3 angepaßt und wird vor der Herstellung der Rohrleitungsverbindung auf das Rohrende 4 aufgeschoben. Bei dem nachfolgenden Spreizvorgang wird der Spannring zusammen mit dem Rohrende 4 vorübergehend aufgeweitet, sodaß das aufgeweitete Rohrende 4 zusammen mit dem aufgesetzten Spannring 5 auf das Endteil 2 des Anschlußteils 1 aufgebracht wird. Anschließende Selbst-Rückverformung führt dann in der oben beschriebenen Weise zu der festen und abdichtenden Schrumpfverbindung zwischen dem Rohrende 4 und dem Endteil 2 des Anschlußteils 1, wobei sich auch der Spannring 5 zusammenzieht und so zusätzlich das Rohrende 4 im Bereich des Spannrings 5 gegen das Endteil 2 preßt.

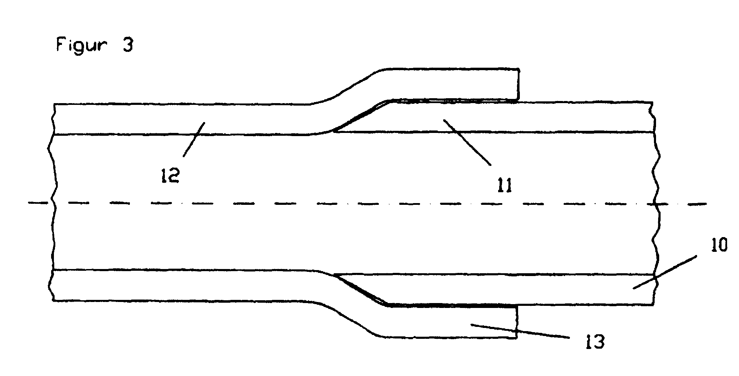

Figur 3 zeigt eine Rohrleitungsverbindung, die zwischen zwei Rohrenden ausgebildet ist. Beide Rohre können aus gleichen oder verschiedenen Materialien bestehen; vorzugsweise sind die Rohre aus vernetztem Polyolefin hergestellt und dienen als Leitungsrohre für korrosive Medien. Als Beispiel seien industrielle, aber besonders auch häusliche oder kommunale Abwässer genannt, die ganz besonders korrosiosfeste Rohrmaterialien erfordern und für die sich Rohre aus vernetztem Polyolefin in der Praxis bewährt haben.

In dem dargestellten Ausführungsbeispiel besitzen die beiden Rohre gleiche Außen- und Innendurchmesser. Es kommt darauf jedoch nicht an, da die gleiche Rohrleitungsverbindung gegebenenfalls auch zwischen Rohren unterschiedlicher Durchmesser hergestellt werden kann, sofern die damit verbundenen Unterschiede in den Innendurchmessern nicht unzulässige Strömungswiderstände und Ablagerungen hervorrufen. Ein erstes Rohr 10 hat ein erstes Rohrende 11; ein zweites Rohr 12 hat ein zweites Rohrende 13. Man erkennt, daß der Innendurchmesser des zweiten Rohrendes 13 aufgeweitet und dieses aufgeweitete zweite Rohrende 13 auf das erste Rohrende 11 des ersten Rohres 10 aufgeschoben ist. Diese Aufweitung wird wie bei den vorstehenden Ausführungsbeispielen mit einem üblichen Spreizdorn bei Umgebungstemperatur vorgenommen und unterliegt der beschriebenen Selbst-Rückverformung, durch die das aufgeweitete zweite Rohrende 13 bestrebt ist, wieder seine ursprüngliche Gestalt anzunehmen. Die großflächige, enge Anlage zwischen den beiden Rohrenden 11 und 13 erzeugt auch hier eine feste und abdichtende Schrumpfverbindung, die wegen der Korrosionsfestigkeit des Materials gegen die vorgenannten Abwässer auch bei langem Gebrauch nicht undicht wird.

Auch hier kann wie in dem in Figur 2 gezeigten Ausführungsbeispiel die Verbindung durch einen Spannring zusätzlich gesichert werden; jedoch ist dabei darauf zu achten, daß unter dem Preßdruck eines solchen Spannrings keine unzulässige Verformung des ersten Rohrendes 11 eintritt, die einen Strömungswiderstand für das durchfließende Abwasser darstellt oder Anlaß zu Ablagerungen aus dem Abwasser im Bereich der Verbindungsstelle gibt. Anstelle des Spannrings kann gegebenenfalls auch ein Haftvermittler zur zusätzlichen Sicherung der Verbindungstelle eingesetzt werden.

Rohre aus vernetztem Polyolefin werden daher auch aus diesem Grunde in der Abwassertechnik eingesetzt, denn auf diese Weise lassen sich leicht sichere, selbstdichtende Schrumpfverbindungen zwischen Glattrohren herstellen. Dazu ergibt sich als weiterer Vorteil, daß die im Endlosverfahren hergestellten Rohre 10 und 11 auch als Endlosrohre verlegt werden können, ohne daß besondere Winkelrohre oder andere Anschlußteile erforderlich sind, um die Rohre in einem gewünschten Verlauf zu verlegen. Es sind daher ohnehin nur an den Eingangs- und Ausgangsstellen Verbindungen zwischen den Rohren zu schaffen.

## Patentansprüche

1. Verfahren zur Herstellung einer Schrumpfverbindung aus einem Rohrende (4) eines Rohres (3) aus vernetztem Polyolefin und einem Anschlußteil (1) mit einer Oberflächenstruktur, bei welchem Verfahren das Rohrende (4) des Rohres (3) aus vernetztem Polyolefin einen Innendurchmesser hat, der kleiner als der Außendurchmesser des Anschlußteils (1) ist, und mit Hilfe eines Spreizdorns bei Umgebungstemperatur auf einen Innendurchmesser aufgeweitet wird, der größer als der Außendurchmesser des Anschlußteils (1) ist, und nach Entfernung des Spreizdorns das noch aufgeweitete Rohrende (4) des Rohres (3) und das Anschlußteil (1) aufeinandergesteckt und anschliessend unter Rückschrumpfen des aufgeweiteten Rohrendes (4) miteinander verbunden werden,
dadurch gekennzeichnet,
daß das Rohrende (4) mit einem Spannring (5) aus einem bei Umgebungstemperatur aufweitbaren und selbst-rückverformbaren Material versehen wird und das zusammen mit dem Spannring (5) bei Umgebungstemperatur reversibel aufgeweitete Rohrende (4) zusammen mit dem Spannring (5) durch Selbst-Rückverformung bei Umgebungstemperatur fest und abdichtend auf das Anschlußteil (1) aufgeschrumpft wird.

2. Verfahren nach Anspruch 1, dadurch gekennzeichnet, daß der Spannring (5) aus vernetztem Polyolefin besteht.

3. Verfahren nach Anspruch 1 oder 2, dadurch gekennzeichnet, daß das aufgeweitete Rohrende (4) auf ein Endteil (2) des Anschlußteils (1) mit einer über dessen Außenumfang vorstehenden Oberflächenstruktur aufgeschrumpft wird.

4. Verfahren nach Anspruch 3, dadurch gekennzeichnet, daß die Oberflächenstruktur aus einem verstärkten, sich zum Ende hin verjüngenden Endteil (2) gebildet wird.

5. Rohrleitungsverbindung in Form einer Schrumpfverbindung aus einem Anschlußteil (1) mit einer Oberflächenstruktur und einem Rohrende (4) eines Rohres (3) aus vernetztem Polyolefin, das einen Innendurchmesser hat, der kleiner als der Außendurchmesser des Anschlußteils (1) ist, wobei das bei Umgebungstemperatur aufgeweitete Rohrende (4) des Rohres (3) unter Rückschrumpfung mit dem Anschlußteil (1) verbunden ist,
dadurch gekennzeichnet,
daß das Rohrende (4) mit einem Spannring (5) aus einem bei Umgebungstemperatur aufweitbaren und selbst-rückverformbaren Material versehen ist und das zusammen mit dem Spannring bei Umgebungstemperatur reversibel aufgeweitete Rohrende (4) aus vernetztem Polyolefin zusammen mit dem Spannring (5) durch Selbst-Rückverformung bei Umgebungstemperatur fest und abdichtend auf das Anschlußteil (1) aufgeschrumpft ist.

6. Rohrleitungsverbindung nach Anspruch 5, dadurch gekennzeichnet, daß der Spannring (5) aus dem gleichen Material wie das Rohr (3) besteht.

7. Rohrleitungsverbindung nach Anspruch 5 oder 6, dadurch gekennzeichnet, daß die Oberflächenstruktur an einem Endteil (2) des Anschlußteils (1) ausgebildet ist und über dessen Außenumfang vorsteht.

8. Rohrleitungsverbindung nach Anspruch 7, dadurch gekennzeichnet, daß die Oberflächenstruktur aus einem verstärkten, sich zum Ende hin verjüngenden Endteil (2) gebildet ist.

9. Rohrleitungsverbindung in Form einer Schrumpfverbindung aus einem ersten Rohrende (11) eines ersten Rohres (10) aus vernetztem Polyolefin und einem zweiten Rohrende (13) eines zweiten Rohres (12) aus vernetztem Polyolefin, das einen Innendurchmesser hat, der kleiner als der Außendurchmesser des ersten Rohrendes (11) ist, wobei das bei Umgebungstemperatur aufgeweitete zweite Rohrende (13) unter Rückschrumpfung mit dem ersten Rohrende (11) verbunden ist,
dadurch gekennzeichnet,
daß das zweite Rohrende (13) mit einem Spannring aus einem bei Umgebungstemperatur aufweitbaren und selbst-rückverformbaren Material versehen ist und das zusammen mit dem Spannring bei Umgebungstemperatur aufgeweitete zweite Rohrende (13) zusammen mit dem Spannring durch Selbst-Rückverformung bei Umgebungstemperatur fest und abdichtend auf das erste Rohrende (11) aufgeschrumpft ist.

10. Rohrleitungsverbindung nach Anspruch 9, dadurch gekennzeichnet, daß der Spannring (5) aus dem gleichen Material wie das zweite Rohr (12) besteht.

11. Rohrleitungsverbindung nach Anspruch 9 oder 10, dadurch gekennzeichnet, daß das erste und zweite Rohr (10,12) als Glattrohre ausgebildet sind.

## Claims

1. Method of producing a shrinkage connection from a tube end (4) of a tube (3) made of cross-linked polyolefin and a connecting member (1) having a surface sructure, in which method the tube end (4) of the tube (3) made of cross-linked polyolefin has an inner diameter, which is smaller than the outer diameter of the connecting member (1), the tube end is expanded at environmental temperature with the use of an expanding mandrel to an inner diameter, which is greater than the outer diameter of the connecting member (1), after removal of the expanding mandrel the still expanded tube end (4) of the tube (3) and the connecting member (1) are telescoped onto each other and subsequently interconnected by back-shrinking of the expanded tube end (4),
characterised in that
the tube end (4) is provided with a tension ring (5) made of a material, which is expandable as well as self-reconvertible at environ-mental temperature, and that the tube end (4), which is reversibly expanded conjointly with the tension ring (5) at environmental temperature, is firmly and sealingly shrunk to the connecting member (1) at environmental temperature conjointly with the tension ring (5) due to self-reconversion.

2. Method according to claim 1, characterised in that the tension ring (5) is made of cross-linked polyolefin.

3. Method according to claim 1 or claim 2, characterised in that the expanded tube end (4) is shrunk to an end portion (2) of the connecting member (1) which end portion has a surface structure protruding from the external circumference thereof.

4. Method according to claim 3, characterised in that the surface structure is formed by a thickened end portion (2) which tapers towards the end.

5. Tube conduit connection in the form of a shrinkage connection formed from a connecting member (1) having a surface structure, and a tube end (4) of a tube (3) made of cross-linked polyolefin and having an inner diameter which is smaller than the outer diameter of the connecting member (1), wherein the tube end (4) of the tube (3) has been expanded at environmental temperature and connected to the connecting member (1) by back-shrinkage,
characterised in that
the tube end (4) is provided with a tension ring (5) made of a material, which is expandable as well as self-reconvertible at environmental temperature, and the tube end (4), which is made of cross-linked polyolefin and which had been reversibly expanded conjointly with the tension ring (5), is firmly and sealingly shrunk to the connecting member (1) conjointly with the tension ring (5) due to self-reconversion at environmental temperature.

6. Tube conduit connection according to claim 5, characterised in that the tension ring (5) and the tube (3) consist of the same material.

7. Tube conduit connection according to claim 5 or 6, characterised in that the surface structure is formed at an end portion (2) of the connecting member (1) and protrudes from the external circumference thereof.

8. Tube conduit connection according to claim 7, characterised in that the surface structure is formed by a thickened end portion (2) which tapers towards the end.

9. Tube conduit connection in the form of a shrinkage connection formed from a first tube end (11) of a first tube (10) made of cross-linked polyolefin and a second tube end (13) of a second tube (12) made of cross-linked polyolefin and having an inner diameter which is smaller than the outer diameter of the first tube end (11), wherein the second tube end (13), which has been expanded at environmental temperature, is connected to the first tube end (11) by back-shrinkage,
characterised in that
the second tube end (13) is provided with a tension ring made of a material, which is expandable as well as self-reconvertible at environmental temperature, and the second tube end (13), which had been reversibly expanded conjointly with the tension ring, is firmly and sealingly shrunk to the first tube end (11) conjointly with the tension ring due to self-reconversion at environmental temperature.

10. Tube conduit connection according to claim 9, characterised in that the tension ring (5) and the seond tube (12) consist ofthe same material.

11. Tube conduit connection according to claim 9 or 10, characterised in that the first tube and the second tube (10,12) are formed as unstructured tubes.

## Revendications

1. Méthode destinée à fabriquer une connexion rétrécissable composée d'une extrémité de tuyau (4) d'un tuyau (3) de polyoléfine réticulée et d'un élément de raccord (1) muni d'une structure superficielle, méthode dans laquelle l'extrémité de tuyau (4) du tuyau (3) de polyoléfine réticulée possède un diamètre intérieur inférieur au diamètre extérieur de l'élément de raccord (1) et est élargie à l'aide d'un mandrin extensible à température ambiante jusqu'à ce qu'elle atteigne un diamètre intérieur supérieur au diamètre extérieur de l'élément de raccord (1), et dans laquelle l'extrémité de tuyau (4) encore élargie du tuyau (3) et l'élément de raccord (1) sont emboîtés l'un sur l'autre après l'enlèvement du mandrin extensible et sont reliés finalement l'un à l'autre de par le rétrécissement de l'extrémité de tuyau (4) élargie,
**caractérisée par le fait que**
l'extrémité de tuyau (4) est pourvue d'un anneau tendeur (5) composé d'une matière susceptible de reprendre automatiquement sa forme initiale et susceptible d'être élargie à température ambiante et par le fait que l'extrémité de tuyau (4) élargie de façon réversible conjointement avec l'anneau tendeur (5) à température ambiante est emmanchée à chaud sur l'élément de raccord (1) solidement et de façon étanchante conjointement avec l'anneau tendeur (5) en reprenant automatiquement sa forme initiale à température ambiante.

2. Méthode selon la revendication 1, **caractérisée par le fait que** l'anneau tendeur (5) se compose de polyoléfine réticulée.

3. Méthode selon la revendication 1 ou 2, **caractérisée par le fait que** l'extrémité de tuyau (4) élargie est emmanchée à chaud sur un embout (2) de l'élément de raccord (1) muni d'une structure superficielle saillant sur la circonférence extérieure de celui-ci.

4. Méthode selon la revendication 3, **caractérisée par le fait que** la structure superficielle est formée d'un embout (2) renforcé s'effilant en direction de l'extrémité.

5. Connexion de conduite de tuyaux en forme de connexion rétrécissable composée d'un élément de raccord (1) muni d'une structure superficielle et d'une extrémité de tuyau (4) d'un tuyau (3) de polyoléfine réticulée possédant un diamètre intérieur inférieur au diamètre extérieur de l'élément de raccord (1), l'extrémité de tuyau (4) du tuyau (3) élargie à température ambiante étant reliée à l'élément de raccord (1) de par son rétrécissement,
**caractérisée par le fait que**
l'extrémité de tuyau (4) est pourvue d'un anneau tendeur (5) composé d'une matière susceptible de reprendre automatiquement sa forme initiale et susceptible d'être élargie à température ambiante et par le fait que l'extrémité de tuyau (4) élargie de façon réversible conjointement avec l'anneau tendeur à température ambiante est emmanchée à chaud sur l'élément de raccord (1) solidement et de façon étanchante conjointement avec l'anneau tendeur (5) en reprenant automatiquement sa forme initiale à température ambiante.

6. Connexion de conduite de tuyaux selon la revendication 5, **caractérisée par le fait que** l'anneau tendeur (5) se compose de la même matière que le tuyau (3).

7. Connexion de conduite de tuyaux selon la revendication 5 ou 6, **caractérisée par le fait que** la structure superficielle est développée à un embout (2) de l'élément de raccord (1) et fait saillie sur la circonférence extérieure de celui-ci.

8. Connexion de conduite de tuyaux selon la revendication 7, **caractérisée par le fait que** la structure superficielle est formée par un embout (2) renforcé s'effilant en direction de l'extrémité.

9. Connexion de conduite de tuyaux en forme de connexion rétrécissable composée d'une première extrémité de tuyau (11) d'un premier tuyau (10) de polyoléfine réticulée et d'une seconde extrémité de tuyau (13) d'un second tuyau (12) de polyoléfine réticulée possédant un diamètre intérieur inférieur au diamètre extérieur de la première extrémité de tuyau (11), la seconde extrémité de tuyau (13) élargie à température ambiante étant reliée à la première extrémité de tuyau (11) de par son rétrécissement,
**caractérisée par le fait que**
la seconde extrémité de tuyau (13) est pourvue d'un anneau tendeur composé d'une matière susceptible de reprendre automatiquement sa forme initiale et susceptible d'être élargie à température ambiante et par le fait que la seconde extrémité de tuyau (13) élargie conjointement avec l'anneau tendeur à température ambiante est emmanchée à chaud sur la première extrémité de tuyau (11) solidement et de façon étanchante conjointement avec l'anneau tendeur en reprenant automatiquement sa forme initiale à température ambiante.

10. Connexion de conduite de tuyaux selon la revendication 9, **caractérisée par le fait que** l'anneau tendeur (5) se compose de la même matière que le second tuyau (12).

11. Connexion de conduite de tuyaux selon la revendication 9 ou 10, **caractérisée par le fait que** le premier et le second tuyau (10,12) sont développés en tuyaux à bout lisse.
